# EUROPÄISCHE PATENTSCHRIFT

(11) **EP 3 394 708 B1**
(45) Veröffentlichungstag und Bekanntmachung des Hinweises auf die Patenterteilung: **19.02.2020**
(21) Anmeldenummer: 16801732.5
(22) Anmeldetag: 17.11.2016
(51) Int. Cl.: G06F 3/01

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ DE FONCTIONNEMENT D'UN SYSTÈME DE RÉALITÉ VIRTUELLE ET SYSTÈME DE RÉALITÉ VIRTUELLE ASSOCIÉ

(30) Priorität: 22.12.2015 DE 102015226580
(43) Veröffentlichungstag der Anmeldung: 31.10.2018
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2016/077970
(87) Internationale Veröffentlichungsnummer: WO 2017/108286

(56) Entgegenhaltungen:
- EP-A2- 1 538 512
- GABRIEL CIRIO ET AL: "The magic barrier tape", PROCEEDINGS OF THE 16TH ACM SYMPOSIUM ON VIRTUAL REALITY SOFTWARE AND TECHNOLOGY; NOVEMBER 18 - 20, 2009, KYOTO, JAPAN, ACM, 2 PENN PLAZA, SUITE 701 NEW YORK NY 10121-0701 USA, 18. November 2009 (2009-11-18), Seiten 155-162, XP058210129, DOI: 10.1145/1643928.1643965 ISBN: 978-1-60558-869-8
- STEFAN GREUTER ET AL: "SpaceWalk", INTERACTIVE ENTERTAINMENT, ACM, 2 PENN PLAZA, SUITE 701 NEW YORK NY 10121-0701 USA, 2. Dezember 2014 (2014-12-02), Seiten 1-7, XP058061852, DOI: 10.1145/2677758.2677781 ISBN: 978-1-4503-2790-9

## Beschreibung

Die Erfindung betrifft ein Verfahren zum Betreiben eines Virtual-Reality-Systems und ein Virtual-Reality-System.

Mittels eines Virtual-Reality-Systems kann eine virtuelle Realität dargestellt werden, wobei als virtuelle Realität üblicherweise die Darstellung und gleichzeitige Wahrnehmung der Wirklichkeit in ihren physikalischen Eigenschaften in einer in Echtzeit computergenerierten, interaktiven virtuellen Umgebung bezeichnet wird.

Virtual-Reality-Systeme können eine Virtual-Reality-Brille zum Anzeigen einer virtuellen Umgebung aufweisen. Bei einer Virtual-Reality-Brille handelt es sich um eine bestimmte Form eines sogenannten Head-Mounted-Displays, bei welchem es sich um ein auf dem Kopf getragenes visuelles Ausgabegerät handelt. Es präsentiert Bilder auf einem augennahen Bildschirm oder projiziert sie direkt auf die Netzhaut. Eine Virtual-Reality-Brille hat dabei zusätzlich noch Sensoren zur Bewegungserfassung des Kopfes. Damit kann die Anzeige einer berechneten Grafik an die Bewegungen eines Träger der Virtual-Reality-Brille angepasst werden. Durch die körperliche Nähe wirken die angezeigten Bildflächen von Head-Mounted-Displays erheblich größer als die freistehender Bildschirme und decken im Extremfall sogar das gesamte Sichtfeld des Benutzers ab. Da jeweilige Displays von Virtual-Reality-Brillen durch die Kopfhaltung allen Kopfbewegungen eines Trägers folgen, bekommt er das Gefühl, sich direkt in einer von einem Computer erzeugten Bildlandschaft zu bewegen.

Derartige Virtual-Reality-Systeme können eine Erfassungseinrichtung aufweisen, mittels welcher eine Position einer in einem Erfassungsbereich angeordneten Virtual-Reality-Brille und/oder Person, welche die Virtual-Reality-Brille aufgesetzt hat, erfasst werden kann. In Abhängigkeit von der erfassten Position der Virtual-Reality-Brille und/oder der Person können die mittels der Virtual-Reality-Brille angezeigten Inhalte derart angepasst werden, dass sich die Person, welche die Virtual-Reality-Brille aufgesetzt hat, innerhalb einer anzeigten virtuellen Umgebung relativ zu einem virtuellen Objekt bewegen kann. Aufgrund von technischen und/oder kostenmäßigen Randbedingungen kann es vorkommen, dass der Erfassungsbereich, innerhalb welchem eine Position der Virtual-Reality-Brille und/oder der Person zuverlässig erfassbar ist, relativ klein im Vergleich zur Größe der angezeigten virtuellen Umgebung ist. Insbesondere in einem derartigen Fall kann das Problem entstehen, dass ein Träger der Virtual-Reality-Brille sich aus dem Erfassungsbereich herausbewegt, innerhalb welchem nur eine zuverlässige Positionserfassung der Virtual-Reality-Brille und/oder der die Virtual-Reality-Brille tragenden Person möglich ist. Infolgedessen kann nicht mehr gewährleistet werden, dass reale Positionsveränderungen der Person auch in entsprechende virtuelle Positionsveränderungen beim Anzeigen der virtuellen Umgebung umgesetzt werden.

Der Konferenzbeitrag "The magic barrier tape: a novel metaphor for infinite navigation in virtual worlds with a restricted work space" von Cirio, G. et al. (2009, DOI 10.1145/1643928.1643965) beschreibt den Einsatz einer Interaktionsmetapher in Form zumindest eines virtuellen Absperrbands für eine Navigation eines Benutzers in einer potentiell unendlichen virtuellen Szene bei einem begrenzten realen Bewegungsbereich. Des Weiteren soll das zumindest eine virtuelle Absperrband den Benutzer über eine Grenze seines Arbeitsbereichs informieren und diese darstellen. An der Grenze kann der Benutzer weiter in virtuelle Szene eintauchen, wenn er das virtuellen Absperrband "wegdrückt". Die Bewegung des Benutzers wird mittels eines hybriden Kontrollmechanismus kontrolliert: Innerhalb des Arbeitsbereiches ermöglicht eine Positionskontrolle reales Gehen, während eine Geschwindigkeitskontrolle ein Bewegen außerhalb der Grenze mittels "Wegdrücken" des virtuellen Absperrbandes erlaubt.

Die EP 1 538 512 A2 zeigt ein Verfahren zum Betreiben einer Augmented-Reality-Brille. In Abhängigkeit von einer realen Blickrichtung eines Trägers der Augmented-Reality-Brille wird eine virtuelle Blickrichtung für eine virtuelle Umgebung ermittelt. Der Träger bewegt sich dabei in einem Erfassungsbereich, in welchem die reale Blickrichtung des Trägers erfasst werden kann. Sobald der Träger sich einer Grenze des Erfassungsbereichs nähert, wird ein Warnton ausgegeben.

Der Konferenzbeitrag "SpaceWalk: Movement and Interaction in Virtual Space with Commodity Hardware" von Greuter, S. et al. (2014, DOI 10.1145/2677758.2677781) erlaubt einem eine Virtual-Reality-Brille tragenden Benutzer sich in einer realen Umgebung, beispielsweise in einem Wohnzimmer, zu bewegen, wenn sich deren physische Ausdehnung von jener einer virtuellen Welt unterscheidet. Bewegt sich ein Benutzer innerhalb eines Erfassungsbereichs, kann eine Position einzelner Körperteile des Benutzers mittels einer Sensoreinrichtung erfasst werden. Um den Benutzer vor einem Verlassen des Erfassungsbereichs zu warnen, werden entsprechende optische Signale auf einem Display der Virtual-Reality-Brille ausgegeben, wenn der Benutzer einen Grenzbereich des Erfassungsbereichs erreicht.

Es ist die Aufgabe der vorliegenden Erfindung, eine Lösung bereitzustellen, mittels welcher ein Träger einer Virtual-Reality-Brille auf zuverlässige Weise gewarnt werden kann, sobald er im Begriff ist, einen Erfassungsbereich einer Erfassungseinrichtung, welche zur Positionserfassung des Trägers und/oder der Virtual-Reality-Brille dient, zu verlassen.

Diese Aufgabe wird durch ein Verfahren zum Betreiben eines Virtual-Reality-Systems sowie durch ein Virtual-Reality-System mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Virtual-Reality-Systems wird fortlaufend mittels einer Erfassungseinrichtung eine Position und Kopfausrichtung einer Person erfasst, welche eine Virtual-Reality-Brille aufgesetzt hat und sich in einem Erfassungsbereich der Erfassungseinrichtung befindet. Entsprechend der erfassten Position und Kopfausrichtung wird ein in einer virtuellen Umgebung angeordnetes virtuelles Objekt mittels der Virtual-Reality-Brille aus einer virtuellen Perspektive angezeigt. Des Weiteren wird anhand der fortlaufend erfassten Position ermittelt, ob die Person einen vorgegebenen Abstand zu einer Grenze des Erfassungsbereichs unterschritten hat. Solange ermittelt wird, dass die Person den vorgegebenen Abstand unterschritten hat, wird ein die Unterschreitung des vorgegebenen Abstands kennzeichnender Effekt mittels der Virtual-Reality-Brille angezeigt, wobei die Art der Darstellung des Effekts in Abhängigkeit von der ermittelten Kopfausrichtung der Person vorgegeben wird.

Der Erfindung liegt dabei die Erkenntnis zugrunde, dass bei Virtual-Reality-Anwendungen, bei denen sich ein Nutzer frei zu einem in der virtuellen Umgebung wiedergegebenen Objekt, zum Beispiel einem virtuellen Fahrzeug, bewegen kann, es immer wieder vorkommen kann, dass der Nutzer sich aus dem Erfassungsbereich herausbewegt, innerhalb welchem nur eine zuverlässige Positionserfassung der Person mittels der betreffenden Erfassungseinrichtung möglich ist. Darüber hinaus liegt der Erfindung noch die Erkenntnis zugrunde, dass es durchaus einen Unterschied macht, ob sich die Person beispielsweise rückwärts aus dem Erfassungsbereich oder vorwärts aus dem Erfassungsbereich herausbewegt, da die Perspektive auf die angezeigte virtuelle Umgebung üblicherweise auch in Abhängigkeit von der Kopfausrichtung angepasst wird.

Mittels des erfindungsgemäßen Verfahrens ist es also zum einen zunächst einmal möglich, die Person, welche die Virtual-Reality-Brille aufgesetzt hat, auf zuverlässige Weise darauf hinzuweisen, wenn sie gerade im Begriff ist, den Erfassungsbereich der Erfassungseinrichtung zu verlassen. Zum anderen kann durch die kopfausrichtungsabhängige Darstellung des Effekts, mittels welchem der Person die Unterschreitung des vorgegebenen Abstands zur entsprechenden Grenze des Erfassungsbereichs angezeigt wird, auf besonders zuverlässige Weise kenntlich gemacht werden, dass die Person gerade dabei ist, den Erfassungsbereich der Erfassungseinrichtung zu verlassen. Durch die kopfausrichtungsabhängige Art der Darstellung des Effekts kann zudem der störende Einfluss auf die Wahrnehmung der angezeigten virtuellen Umgebung besonders gut minimiert werden, ohne den Hinweischarakter des eingeblendeten Effekts zu stark zu verringern. Denn bewegt sich die Person, welche die Virtual-Reality-Brille aufgesetzt hat, beispielsweise rückwärts in Richtung einer Grenze des Erfassungsbereichs, so bewegt sie sich auch rückwärts von dem angezeigten virtuellen Objekt weg. Üblicherweise wird die Person dabei ihren Blick auf das angezeigte virtuelle Objekt gerichtet haben, in Folge dessen eine andere Form der Darstellung des Effekts zur Warnung der Person hilfreicher ist, als wenn die Person vorwärts auf die entsprechende Grenze des Erfassungsbereichs zuläuft und dabei ihren Blick auch nicht auf das angezeigte virtuelle Objekt gerichtet hat.

Zudem ist es erfindungsgemäß vorgesehen, dass anhand der erfassten Kopfausrichtung ermittelt wird, ob der Kopf der Person beim Unterschreiten des vorgegebenen Abstands frontal oder rückwärtig auf die Grenze des Erfassungsbereichs ausgerichtet ist. Durch die Unterscheidung zwischen frontaler und rückwärtiger Ausrichtung des Kopfs der Person kann die Einblendung des kennzeichnenden Effekts besonders passgenau ausgewählt werden, so dass die Person zum einen zuverlässig darauf hingewiesen werden kann, dass sie gerade im Begriff ist den Erfassungsbereich zu verlassen, zum anderen kann die Person auch durch die Einblendung des an die Kopfausrichtung angepassten Effekts möglichst wenig in der Wahrnehmung der eingeblendeten virtuellen Umgebung gestört werden.

Eine weitere vorteilhafte Ausführungsform der Erfindung sieht vor, dass ein binokulares Gesichtsfeld für die Person vorgegeben und von einer frontalen Ausrichtung ausgegangen wird, falls die Grenze des Erfassungsbereichs im binokularen Gesichtsfeld liegt und andernfalls von einer rückwärtigen Ausrichtung ausgegangen wird. Unter dem binokularen Gesichtsfeld ist der bei Fixierung eines Gegenstands gleichzeitig noch überschaubare Raum bei ruhender Kopfhaltung und ohne Augenbewegungen zu verstehen. Beispielsweise kann als das binokulare Gesichtsfeld, also der mit beiden Augen zugleich überschaubare Raum, in horizontaler Richtung auf ca. 220° vorgegeben sein. Dies entspricht einem üblichen Durchschnittswert für einen Menschen. Da die Person die Virtual-Reality-Brille aufgesetzt hat, kann sie nicht wirklich ihre reale Umgebung und somit auch nicht die Grenze des Erfassungsbereichs sehen. Jedoch wird das vorgegebene binokulare Gesichtsfeld der Virtual-Reality-Brille zugeordnet, so dass beispielsweise anhand der erfassten Ausrichtung der Virtual-Reality-Brille zum einen auf die Kopfausrichtung und zum anderen darauf geschlossen werden kann, ob denn bei abgesetzter Virtual-Reality-Brille die betreffende Grenze des Erfassungsbereichs im binokularen Gesichtsfeld liegen würde oder nicht. Dadurch kann auf besonders einfache und zuverlässige Weise ermittelt werden, ob der Kopf der Person beim Unterschreiten des vorgegebenen Abstands frontal oder rückwärtig auf die Grenze des Erfassungsbereichs ausgerichtet ist.

Zudem ist es erfindungsgemäß vorgesehen, dass bei einer frontalen Ausrichtung des Kopfs zur Grenze mittels der Virtual-Reality-Brille ausschließlich eine in der virtuellen Umgebung vor der Person angeordnete virtuelle Begrenzung als der Effekt angezeigt wird. Beispielsweise kann eine Art virtuelle Absperrung oder virtuelle Barriere angezeigt werden, welche in der virtuellen Umgebung in ihrer Ausdehnung stark begrenzt ist. Die realitätsnahe Wahrnehmung der virtuellen Umgebung und des darin angezeigten virtuellen Objekts wird dadurch besonders wenig eingeschränkt, wobei dennoch die Person auf zuverlässige Weise darauf hingewiesen wird, dass sie gerade im Begriff ist, den Erfassungsbereich der Erfassungseinrichtung zu verlassen.

Zudem ist es erfindungsgemäß vorgesehen, dass bei einer rückwärtigen Ausrichtung des Kopfs zur Grenze mittels der Virtual-Reality-Brille ein dem Erfassungsbereich entsprechendes Gitternetz in der virtuellen Umgebung als der Effekt angezeigt wird. Geht die Person also beispielsweise in der Realität rückwärts auf eine Grenze des Erfassungsbereichs zu und hat ihren Kopf dabei gerade nach vorne ausgerichtet, so würde sie den in der virtuellen Umgebung hinter ihr liegenden Bereich gar nicht sehen können. Dadurch, dass in einem derartigen Fall und auch ganz allgemein bei einer rückwärtigen Ausrichtung des Kopfs zur Grenze ein dem Erfassungsbereich entsprechendes Gitternetz in der virtuellen Umgebung als Effekt angezeigt wird, wird die Person dennoch auf zuverlässige Weise darauf hingewiesen, dass sie gerade im Begriff ist, den Erfassungsbereich der Erfassungseinrichtung zu verlassen.

Alternativ oder zusätzlich sieht die Erfindung vor, dass bei einer rückwärtigen Ausrichtung des Kopfs zur Grenze mittels der Virtual-Reality-Brille das virtuelle Objekt zumindest teilweise ausgeblendet und/oder verdunkelt wird. Denn bei einer rückwärtigen Ausrichtung des Kopfs zur Grenze wird die Person üblicherweise ihren Blick auf das angezeigte virtuelle Objekt gerichtet haben. Dadurch, dass in einem derartigen Fall das virtuelle Objekt zumindest teilweise ausgeblendet und/oder verdunkelt wird, wird die Person auf einfache und zuverlässige Weise darauf hingewiesen, dass sie gerade im Begriff ist, den Erfassungsbereich der Erfassungseinrichtung zu verlassen.

Alternativ oder zusätzlich sieht die Erfindung vor, dass bei einer rückwärtigen Ausrichtung des Kopfs zur Grenze die virtuelle Umgebung zumindest teilweise ausgeblendet und/oder verdunkelt wird. Auch bei dieser Vorgehensweise wird die Person auf besonders einfache und zuverlässige Weise darauf hingewiesen, dass sie gerade im Begriff ist, den Erfassungsbereich der Erfassungseinrichtung zu verlassen.

Gemäß einer weiteren vorteilhaften Ausführungsform der Erfindung ist es vorgesehen, dass die virtuelle Perspektive, aus welcher das in der virtuellen Umgebung angeordnete virtuelle Objekt angezeigt wird, derart vorgegeben wird, dass eine virtuelle Blickrichtung der erfassten Kopfausrichtung und eine virtuelle Beobachtungsposition der erfassten Position der Person entspricht.

Zur Erfassung der Kopfausrichtung und zur Erfassung der Position der Person kann beispielsweise mittels der Erfassungseinrichtung die Ausrichtung und Positionierung der Virtual-Reality-Brille fortlaufend erfasst werden. Eine reale Positionsveränderung der Person wird also vorzugsweise eins zu eins in eine entsprechende Positionsveränderung innerhalb der angezeigten virtuellen Umgebung umgesetzt. Gleichermaßen wird eine reale Veränderung der Kopfausrichtung in eine entsprechende Veränderung der virtuellen Blickrichtung auf das angezeigte virtuelle Objekt umgesetzt. Die Person kann sich virtuell also besonders natürlich innerhalb der angezeigten virtuellen Umgebung bewegen und das angezeigte virtuelle Objekt aus verschiedensten virtuellen Blickrichtungen und virtuellen Beobachtungspositionen begutachten und wird darüber hinaus zuverlässig gewarnt, sobald sie Gefahr läuft, den Erfassungsbereich der Erfassungseinrichtung zu verlassen. Auch wenn der Erfassungsbereich verhältnismäßig klein im Vergleich zur Größe der angezeigten virtuellen Umgebung ist, läuft die Person also nicht Gefahr, den Erfassungsbereich zu verlassen, da diese rechtzeitig durch Einblendung des kopfausrichtungsabhängigen Effekts darauf hingewiesen wird.

Das erfindungsgemäße Virtual-Reality-System umfasst eine Virtual-Reality-Brille und eine Erfassungseinrichtung, welche dazu ausgelegt ist, eine Position und Kopfausrichtung einer Person, welche die Virtual-Reality-Brille aufgesetzt hat und sich in einem Erfassungsbereich befindet, zu erfassen. Darüber hinaus umfasst das Virtual-Reality-System eine Steuereinrichtung, welche dazu ausgelegt ist, die Virtual-Reality-Brille zum Anzeigen eines in einer virtuellen Umgebung angeordneten virtuellen Objekts aus einer virtuellen Perspektive anzusteuern, welche entsprechend der erfassten Position und Kopfausrichtung vorgegeben wird. Des Weiteren ist die Steuereinrichtung dazu ausgelegt, anhand der erfassten Position zu ermitteln, ob die Person einen vorgegebenen Abstand zu einer Grenze des Erfassungsbereichs unterschritten hat. Ferner ist die Steuereinrichtung dazu ausgelegt, die Virtual-Reality-Brille zum Anzeigen eines die Unterschreitung des vorgegebenen Abstands kennzeichnenden Effekts anzusteuern, solange ermittelt wird, dass die Person den vorgegebenen Abstand unterschritten hat, wobei die Art der Darstellung des Effekts in Abhängigkeit von der ermittelten Kopfausrichtung vorgegeben wird. Die Steuereinrichtung ist zudem dazu ausgelegt, anhand der erfassten Kopfausrichtung zu ermitteln, ob der Kopf der Person beim Unterschreiten des vorgegebenen Abstands frontal oder rückwärtig auf die Grenze des Erfassungsbereichs ausgerichtet ist; bei einer frontalen Ausrichtung des Kopfs zur Grenze mittels der Virtual-Reality-Brille ausschließlich eine in der virtuellen Umgebung vor der Person angeordnete virtuelle Begrenzung als den Effekt anzuzeigen; bei einer rückwärtigen Ausrichtung des Kopfs zur Grenze mittels der Virtual-Reality-Brille ein dem Erfassungsbereich entsprechendes Gitternetz in der virtuellen Umgebung als den Effekt anzuzeigen und/oder das virtuelle Objekt zumindest teilweise auszublenden und/oder zu verdunkeln und/oder die virtuelle Umgebung zumindest teilweise auszublenden und/oder zu verdunkeln. Vorteilhafte Ausgestaltungen des erfindungsgemäßen Verfahrens sind als vorteilhafte Ausgestaltungen des erfindungsgemäßen Virtual-Reality-Sytems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombination sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig.1: eine schematische Darstellung eines Virtual-Reality-Systems, welches eine Virtual-Reality-Brille, eine Steuereinrichtung zum Ansteuern der Virtual-Reality-Brille sowie eine Erfassungseinrichtung zur Positionserfassung und zur Erfassung der Ausrichtung der Virtual-Reality-Brille aufweist;
- Fig. 2: eine Perspektivansicht eines schematisch dargestellten Erfassungsbereichs der Erfassungseinrichtung, in welchem eine Person angeordnet ist, welche die Virtual-Reality-Brille aufgesetzt hat;
- Fig. 3: eine schematische Perspektivansicht einer mittels der Virtual-Reality-Brille angezeigten virtuellen Umgebung, innerhalb welcher ein virtuelles Kraftfahrzeug angezeigt wird;
- Fig. 4: eine weitere Perspektivansicht der schematisch dargestellten virtuellen Umgebung, wobei mittels der Virtual-Reality-Brille innerhalb der virtuellen Umgebung ein den Erfassungsbereich der Erfassungseinrichtung kennzeichnendes Gitternetz eingeblendet wird; und in
- Fig. 5: eine weitere Perspektivansicht der schematisch dargestellten Umgebung, wobei mittels der Virtual-Reality-Brille eine virtuelle Begrenzung eingeblendet wird.

In den Figuren werden gleiche oder funktionsgleiche Elemente mit gleichen Bezugszeichen versehen.

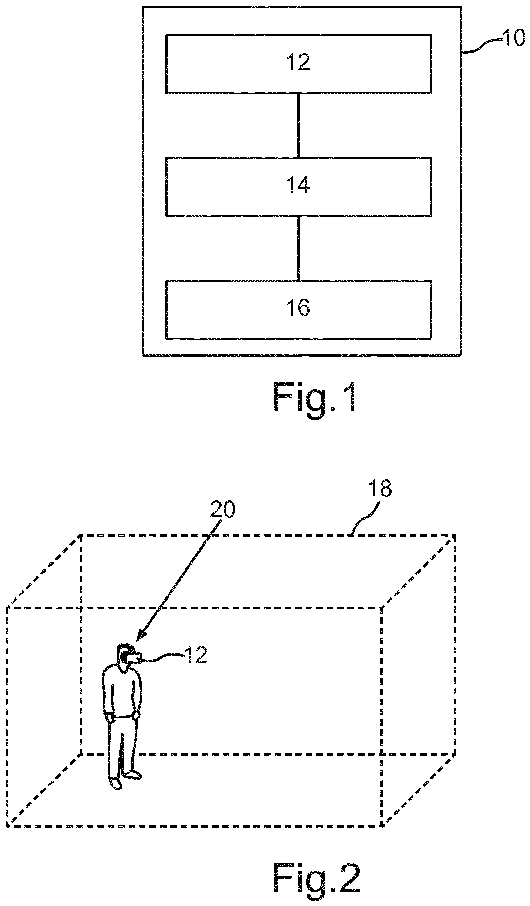

Ein insgesamt mit 10 bezeichnetes Virtual-Reality-System ist in einer schematischen Darstellung in Fig. 1 gezeigt. Das Virtual-Reality-System 10 umfasst eine Virtual-Reality-Brille 12, eine Steuereinrichtung 14 zum Ansteuern der Virtual-Reality-Brille 12 sowie eine Erfassungseinrichtung 16, welche dazu ausgelegt ist, eine Position und Ausrichtung der Virtual-Reality-Brille 12 zu erfassen.

In Fig. 2 ist ein Erfassungsbereich 18 der Erfassungseinrichtung 16 in einer schematischen Perspektivansicht dargestellt, wobei eine Person 20, welche die Virtual-Reality-Brille 12 aufgesetzt hat, sich innerhalb des Erfassungsbereichs 18 befindet. Solange sich die Virtual-Reality-Brille 12 innerhalb des Erfassungsbereichs 18 befindet, kann die Erfassungseinrichtung 16 zuverlässig die Position und Ausrichtung der Virtual-Reality-Brille 12 ermitteln. Anhand den erfassten Positions- und Ausrichtungsdaten der Virtual-Reality-Brille 12 kann die Steuereinrichtung 14 eine Position und Kopfausrichtung der Person 20 bestimmen. Solange sich die Person 20 also nicht aus dem Erfassungsbereich 18 entfernt und somit sich die Virtual-Reality-Brille 12 innerhalb des Erfassungsbereichs 18 befindet, können Veränderungen der Position der Person 20 und Veränderungen der Kopfausrichtung der Person 20 zuverlässig mittels der Erfassungseinrichtung 16 in Kombination mit der Steuereinrichtung 14 erfasst bzw. ermittelt werden.

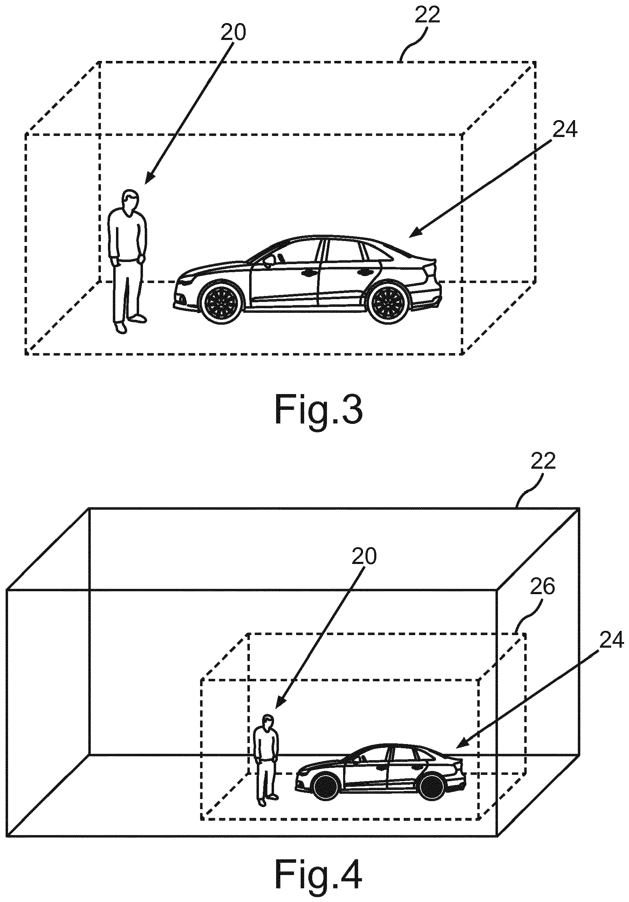

In Fig. 3 ist eine virtuelle Umgebung 22, innerhalb welcher ein virtuelles Kraftfahrzeug 24 angeordnet ist, in einer schematischen Perspektivansicht gezeigt. Die virtuelle Umgebung 22 mitsamt dem virtuellen Kraftfahrzeug 24 wird dabei mittels der Virtual-Reality-Brille 12 angezeigt. Das virtuelle Kraftfahrzeug 24 wird dabei mittels der Virtual-Reality-Brille 12 aus einer virtuellen Perspektive angezeigt, welche entsprechend der erfassten Position und Kopfausrichtung der Person 20 vorgegeben wird. Die Person 20 ist in Fig. 3 nur zu Illustrationszwecken dargestellt, um die virtuelle Perspektive zu verdeutlichen, aus welcher das virtuelle Kraftfahrzeug 24 gerade mittels der Virtual-Reality-Brille 12 angezeigt wird. Die virtuelle Perspektive, aus welcher das in der virtuellen Umgebung 22 angeordnete virtuelle Kraftfahrzeug 24 angezeigt wird, wird dabei derart vorgegeben, dass eine virtuelle Blickrichtung der erfassten Kopfausrichtung und eine virtuelle Beobachtungsposition der erfassten Position der Person 20 entspricht. Dreht die Person 20 also ihren Kopf, so wird die Virtual-Reality-Brille 12 entsprechend angesteuert, so dass die Person 20 innerhalb der virtuellen Umgebung 22 ihre virtuelle Kopfausrichtung und somit auch ihre virtuelle Blickrichtung auf das virtuelle Kraftfahrzeug 24 verändert. Bewegt sich die Person 20 in der Realität, so bewegt sich die Person 20 innerhalb der virtuellen Umgebung 22 ebenfalls entsprechend, so dass diese beispielsweise ihren Abstand zum virtuellen Kraftfahrzeug 24 virtuell vergrößert oder verkleinert.

Wie durch die beiden Fig. 2 und 3 angedeutet, ist die virtuelle Umgebung 22 wesentlich größer als der Erfassungsbereich 18, innerhalb welchem eine zuverlässige Erfassung der Position und Ausrichtung der Virtual-Reality-Brille 12 und somit auch eine zuverlässige Ermittlung der Kopfausrichtung und Position der Person 20 ermittelbar ist. Dadurch kann die Person 20 Gefahr laufen, den Erfassungsbereich 18 versehentlich zu verlassen, beispielsweise wenn die Person 20 ihren virtuellen Abstand zum virtuellen Kraftfahrzeug 24 vergrößern möchte. Sobald die Person 20 jedoch den Erfassungsbereich 18 verlässt, kann nicht mehr zuverlässig sichergestellt werden, dass Positionsveränderungen und Veränderungen der Kopfausrichtung der Person 20 innerhalb der virtuellen Umgebung 22 entsprechend eins zu eins umgesetzt werden.

In Fig. 4 ist die virtuelle Umgebung 22 mitsamt dem virtuellen Kraftfahrzeug 24 in einer weiteren schematischen Perspektivansicht dargestellt. Anhand der fortlaufend ermittelten Position der Person 20 wird mittels der Steuereinrichtung 14 ermittelt, ob die Person 20 einen vorgegebenen Abstand zu einer Grenze des Erfassungsbereichs 18 unterschritten hat. Bei einer wie in Fig. 2 angedeuteten quaderförmigen Ausbildung des Erfassungsbereichs 18 werden jeweilige Grenzen des Erfassungsbereichs 18 also durch die vier Seitenwände und durch eine Art Decke definiert. Da ein Verlassen des Erfassungsbereichs 18 nach oben eher unwahrscheinlich ist, kann es auch ausreichen, dass nur fortlaufend überprüft wird, ob die Person 20 den Erfassungsbereich 18 in horizontaler Richtung verlassen hat.

Sobald ermittelt wird, dass die Person 20 den vorgegebenen Abstand zu einer der Grenzen des Erfassungsbereichs 18 unterschritten hat, wird mittels der Virtual-Reality-Brille 12 ein die Unterschreitung des vorgegebenen Abstands kennzeichnender Effekt angezeigt. Die Art der Darstellung dieses Effekts wird dabei in Abhängigkeit von der ermittelten Kopfausrichtung der Person 20 gewählt. Dabei wird anhand der erfassten Kopfausrichtung der Person 20 ermittelt, ob der Kopf der Person 20 beim Unterschreiten des vorgegebenen Abstands zu der betreffenden Grenze frontal oder rückwärtig auf die entsprechende Grenze des Erfassungsbereichs 18 ausgerichtet ist. Dafür kann beispielsweise ein binokulares Gesichtsfeld für die Person 20 vorgegeben werden, wobei von einer frontalen Ausrichtung ausgegangen wird, falls die betreffende Grenze des Erfassungsbereichs 18 im binokularen Gesichtsfeld der Person 20 liegt und andernfalls wird von einer rückwärtigen Ausrichtung des Kopfs der Person 20 ausgegangen.

In Fig. 4 ist nun der Fall dargestellt, dass die Person 20 - entsprechend der Darstellung in Fig. 2 - rückwärts nach links aus dem Erfassungsbereich 18 herauszutreten droht, da sich die Person 20 gerade rückwärts bewegt. Mittels der Virtual-Reality-Brille 12 wird aufgrund der Kopfausrichtung der Person 20 das virtuelle Kraftfahrzeug 24 also in einer Frontalansicht gezeigt, wobei sich die Person 20 virtuell aufgrund ihrer realen Bewegung rückwärts immer weiter von dem virtuellen Kraftfahrzeug 24 entfernt. Nähert sich die Person 20 dabei in der Realität zu sehr an die linke Grenze des Erfassungsbereichs 18 an, so wird ein dem realen Erfassungsbereich 18 entsprechendes Gitternetz 26 innerhalb der virtuellen Umgebung 22 als Effekt angezeigt, um die Person 20 darauf hinzuweisen, dass sie gerade im Begriff ist, den Erfassungsbereich 18 zu verlassen. Das Gitternetz 26 wird dabei genauso groß gewählt, wie der reale Erfassungsbereich 18. Durch Einblendung des Gitternetzes 26 kann die Person 20 innerhalb der virtuellen Umgebung 22 einfach erkennen, dass sie gerade dabei ist, rückwärts aus dem Erfassungsbereich 18 herauszutreten.

Alternativ oder zusätzlich kann es bei einer rückwärtigen Ausrichtung des Kopfs der Person 20 zur betreffenden Grenze des Erfassungsbereichs 18 auch vorgesehen sein, dass mittels der Virtual-Reality-Brille 12 das virtuelle Kraftfahrzeug 24 zumindest teilweise ausgeblendet und/oder verdunkelt wird. Wenn die Person 20 sich gerade rückwärts auf eine der Grenzen des Erfassungsbereichs 18 zu bewegt und dabei ihren Kopf mehr oder weniger geradeaus gerichtet hat, blickt sie innerhalb der virtuellen Umgebung 22 weiterhin auf das virtuelle Kraftfahrzeug 24. Dadurch, dass bei Unterschreitung des vorgegebenen Abstands zur entsprechenden Grenze des Erfassungsbereichs 18 das virtuelle Kraftfahrzeug 24 zumindest teilweise ausgeblendet und/oder verdunkelt wird, wird die Person 20 auf einfache Weise dazu angehalten, den Erfassungsbereich 18 nicht zu verlassen. Alternativ oder zusätzlich kann es auch vorgesehen sein, dass in einem derartigen Fall die virtuelle Umgebung 22, bei welcher es sich beispielsweise um eine Art virtuellen Showroom oder dergleichen handeln kann, zumindest teilweise ausgeblendet und/oder verdunkelt wird. Dadurch wird die Person 20 ebenfalls auf zuverlässige Weise darauf hingewiesen, dass sie gerade im Begriff ist, rückwärts aus dem Erfassungsbereich 18 herauszutreten.

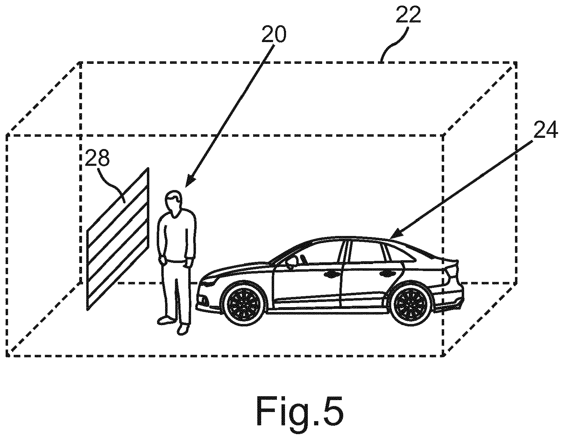

In Fig. 5 ist die virtuelle Umgebung 22 mitsamt dem virtuellen Kraftfahrzeug 24 in einer weiteren Perspektivansicht gezeigt. Im vorliegenden Fall ist die Person 20 gerade im Begriff, den Erfassungsbereich 18 - wiederum ausgehend von der Darstellung in Fig. 2 - vorwärts schreitend nach links zu verlassen. Da die Person 20 dabei ihren Kopf geradeaus gerichtet hat, blickt sie innerhalb der virtuellen Umgebung 22 von dem virtuellen Kraftfahrzeug 24 weg. Sollte die Person 20 dabei den vorgegebenen Abstand zur betreffenden Grenze des Erfassungsbereichs 18 unterschreiten, so wird aufgrund der frontalen Ausrichtung des Kopfs der Person 20 bezogen auf die Grenze des Erfassungsbereichs 18 mittels der Virtual-Reality-Brille 12 eine in der virtuellen Umgebung 22 vor der Person 20 angeordnete virtuelle Begrenzung 28 angezeigt, um die Person 20 darauf hinzuweisen, dass sie gerade im Begriff ist, aus dem Erfassungsbereich 18 hinauszutreten. In dem Fall wird also ein innerhalb der virtuellen Umgebung 22 sehr begrenzter lokaler Effekt angezeigt, um die Person 20 darauf hinzuweisen, dass sie gerade im Begriff ist, den Erfassungsbereich 18 zu verlassen. Denn aufgrund ihrer realen Kopfausrichtung und der daraus resultierenden virtuellen Blickrichtung ist es ausreichend, die relativ kleine Begrenzung 28 innerhalb der virtuellen Umgebung 22 einzublenden, um die Person 20 darauf hinzuweisen, dass sie gleich den Erfassungsbereich 18 verlassen wird. Aufgrund der frontalen Kopfausrichtung hat die Begrenzung 28 zudem noch einen richtungsweisenden Charakter für die Person 20. Der Person 20 wird klar, dass sie gerade frontal auf eine der Grenzen des Erfassungsbereichs 18 zusteuert, wobei durch die Begrenzung 28 die nahende Grenze des Erfassungsbereichs 18 innerhalb der angezeigten virtuellen Umgebung 22 gekennzeichnet wird.

Durch die kopfausrichtungsabhängige Einblendung eines entsprechenden Effekts, mittels welchem die Person 20 darauf hingewiesen wird, dass sie gerade im Begriff ist, den Erfassungsbereich 18 zu verlassen, kann zum einen relativ effektiv verhindert werden, dass die Person 20 den Erfassungsbereich 18 tatsächlich verlässt und zum anderen wird die Wahrnehmung der angezeigten virtuellen Umgebung 22 dabei möglichst wenig beeinträchtigt.

## Patentansprüche

1. Verfahren zum Betreiben eines Virtual-Reality-Systems (10), mit den Schritten:
- Erfassen einer Position und Kopfausrichtung einer Person (20), welche eine Virtual-Reality-Brille (12) aufgesetzt hat und sich in einem Erfassungsbereich (18) befindet, mittels einer Erfassungseinrichtung (16);
- Anzeigen eines in einer virtuellen Umgebung (22) angeordneten virtuellen Objekts (24) mittels der Virtual-Reality-Brille (12) aus einer virtuellen Perspektive, welche entsprechend der erfassten Position und Kopfausrichtung vorgegeben wird;
- Ermitteln anhand der erfassten Position, ob die Person (20) einen vorgegebenen Abstand zu einer Grenze des Erfassungsbereichs (18) unterschritten hat;
- solange ermittelt wird, dass die Person (20) den vorgegebenen Abstand unterschritten hat: Anzeigen eines die Unterschreitung des vorgegebenen Abstands kennzeichnenden Effekts (26, 28) mittels der Virtual-Reality-Brille (12), wobei die Art der Darstellung des Effekts (26, 28) in Abhängigkeit von der ermittelten Kopfausrichtung vorgegeben wird;
**dadurch gekennzeichnet, dass**
- anhand der erfassten Kopfausrichtung ermittelt wird, ob der Kopf der Person (20) beim Unterschreiten des vorgegebenen Abstands frontal oder rückwärtig auf die Grenze des Erfassungsbereichs (18) ausgerichtet ist;
- bei einer frontalen Ausrichtung des Kopfs zur Grenze mittels der Virtual-Reality-Brille (12) ausschließlich eine in der virtuellen Umgebung (22) vor der Person (20) angeordnete virtuelle Begrenzung (28) als der Effekt angezeigt wird;
- bei einer rückwärtigen Ausrichtung des Kopfs zur Grenze mittels der Virtual-Reality-Brille (12) ein dem Erfassungsbereich (18) entsprechendes Gitternetz (26) in der virtuellen Umgebung (22) als der Effekt angezeigt und/oder das virtuelle Objekt (24) zumindest teilweise ausgeblendet und/oder verdunkelt und/oder die virtuelle Umgebung (22) zumindest teilweise ausgeblendet und/oder verdunkelt wird.

2. Verfahren nach Anspruch 1,
**dadurch gekennzeichnet, dass**
ein binokulares Gesichtsfeld für die Person (20) vorgegeben und von einer frontalen Ausrichtung ausgegangen wird, falls die Grenze des Erfassungsbereichs (18) im binokularen Gesichtsfeld liegt und andernfalls von einer rückwärtigen Ausrichtung ausgegangen wird.

3. Verfahren nach einem der vorhergehenden Ansprüche,
**dadurch gekennzeichnet, dass**
die virtuelle Perspektive, aus welcher das in der virtuellen Umgebung (22) angeordnete virtuelle Objekt (24) angezeigt wird, derart vorgegeben wird, dass eine virtuelle Blickrichtung der erfassten Kopfausrichtung und eine virtuelle Beobachtungsposition der erfassten Position der Person (20) entspricht.

4. Virtual-Reality-System (10), mit
- einer Virtual-Reality-Brille (12);
- einer Erfassungseinrichtung (16), welche dazu ausgelegt ist, eine Position und Kopfausrichtung einer Person (20), welche die Virtual-Reality-Brille (12) aufgesetzt hat und sich in einem Erfassungsbereich (18) befindet, zu erfassen;
- einer Steuereinrichtung (14), welche dazu ausgelegt ist,
• die Virtual-Reality-Brille (12) zum Anzeigen eines in einer virtuellen Umgebung (22) angeordneten virtuellen Objekts (24) aus einer virtuellen Perspektive anzusteuern, welche entsprechend der erfassten Position und Kopfausrichtung vorgegeben wird;
• anhand der erfassten Position zu ermitteln, ob die Person (20) einen vorgegebenen Abstand zu einer Grenze des Erfassungsbereichs (16) unterschritten hat;
• die Virtual-Reality-Brille (12) zum Anzeigen eines die Unterschreitung des vorgegebenen Abstands kennzeichnenden Effekts (26, 28) anzusteuern, solange ermittelt wird, dass die Person (20) den vorgegebenen Abstand unterschritten hat, wobei die Art der Darstellung des Effekts (26, 28) in Abhängigkeit von der ermittelten Kopfausrichtung vorgegeben wird;
**dadurch gekennzeichnet, dass**
die Steuereinrichtung (14) zudem dazu ausgelegt ist,
- anhand der erfassten Kopfausrichtung zu ermitteln, ob der Kopf der Person (20) beim Unterschreiten des vorgegebenen Abstands frontal oder rückwärtig auf die Grenze des Erfassungsbereichs (18) ausgerichtet ist;
- bei einer frontalen Ausrichtung des Kopfs zur Grenze mittels der Virtual-Reality-Brille (12) ausschließlich eine in der virtuellen Umgebung (22) vor der Person (20) angeordnete virtuelle Begrenzung (28) als den Effekt anzuzeigen;
- bei einer rückwärtigen Ausrichtung des Kopfs zur Grenze mittels der Virtual-Reality-Brille (12) ein dem Erfassungsbereich (18) entsprechendes Gitternetz (26) in der virtuellen Umgebung (22) als den Effekt anzuzeigen und/oder das virtuelle Objekt (24) zumindest teilweise auszublenden und/oder zu verdunkeln und/oder die virtuelle Umgebung (22) zumindest teilweise auszublenden und/oder zu verdunkeln.

## Claims

1. Method for operating a Virtual Reality System (10), comprising the steps:
- detecting, by means of a detection device (16), a position and head alignment of a person (20) who is wearing virtual reality glasses (12) and is in a detection area (18);
- displaying a virtual object (24) arranged in a virtual environment (22) by means of the virtual reality glasses (12) from a virtual perspective, which is predetermined in accordance with the detected position and head alignment;
- determining on the basis of the detected position whether the person (20) has not reached a predetermined distance from a boundary of the detection area (18);
- as long as it is determined that the person (20) has not reached the predetermined distance: displaying an effect (26, 28) by means of the virtual reality glasses (12) characterising the fact that the predetermined distance has not been reached, wherein the type of representation of the effect (26, 28) is predetermined as a function of the determined head alignment;
**characterised in that**
- on the basis of the detected head alignment, it is determined whether the head of the person (20) is aligned frontally or rearwardly to the boundary of the detection area (18) when the predetermined distance has not been reached;
- in the case of a frontal alignment of the head towards the boundary, only a virtual limit (28) arranged in front of the person (20) in the virtual environment (22) is displayed as the effect by means of the virtual reality glasses (12);
- in the case of a rearward alignment of the head towards the boundary, a grid (26) corresponding to the detection area (18) is displayed in the virtual environment (22) as the effect by means of the virtual reality glasses (12) and/or the virtual object (24) is at least partially hidden and/or darkened and/or the virtual environment (22) is at least partially hidden and/or darkened.

2. Method according to claim 1,
**characterised in that**
a binocular field of view is predetermined for the person (20) and a frontal alignment is assumed if the boundary of the detection area (18) lies in the binocular field of view, and a rearward alignment is assumed otherwise.

3. Method according to any one of the preceding claims,
**characterised in that**
the virtual perspective, from which the virtual object (24) arranged in the virtual environment (22) is displayed, is predetermined such that a virtual viewing direction corresponds to the detected head alignment and a virtual observation position corresponds to the detected position of the person (20).

4. Virtual Reality System (10), comprising
- virtual reality glasses (12);
- a detection device (16) which is designed to detect a position and head alignment of a person (20) who is wearing the virtual reality glasses (12) and is in a detection area (18);
- a control device (14) which is designed
• to control the virtual reality glasses (12) for displaying a virtual object (24) arranged in a virtual environment (22) from a virtual perspective, which is predetermined in accordance with the detected position and head alignment;
• to determine, on the basis of the detected position, whether the person (20) has not reached a predetermined distance from a boundary of the detection area (16);
• to control the virtual reality glasses (12) for displaying an effect (26, 28) characterising the fact that the predetermined distance has not been reached, as long as it is determined that the person (20) has not reached the predetermined distance, wherein the type of representation of the effect (26, 28) is predetermined as a function of the determined head alignment;
**characterised in that**
the control device (14) is also designed
- to determine, on the basis of the detected head alignment, whether the head of the person (20) is aligned frontally or rearwardly to the boundary of the detection area (18) when the predetermined distance has not been reached;
- in the case of a frontal alignment of the head towards the boundary, to display only a virtual limit (28) arranged in front of the person (20) in the virtual environment (22) as the effect by means of the virtual reality glasses (12);
- in the case of a rearward alignment of the head towards the boundary, to display a grid (26) corresponding to the detection area (18) in the virtual environment (22) as the effect by means of the virtual reality glasses (12) and/or to at least partially hide and/or darken the virtual object (24) and/or to at least partially hide and/or darken the virtual environment (22).

## Revendications

1. Procédé de fonctionnement d'un système de réalité virtuelle (10), avec les étapes consistant à :
- au moyen d'un dispositif de détection (16), détecter une position et une orientation de tête d'une personne (20) qui a mis des lunettes de réalité virtuelle (12) et se trouve dans une zone de détection (18) ;
- afficher un objet virtuel (24) agencé dans un environnement virtuel (22) au moyen des lunettes de réalité virtuelle (12) en se plaçant dans une perspective virtuelle prédéterminée en fonction de la position et de l'orientation de tête détectées ;
- déterminer, à l'aide de la position détectée, si la personne (20) est parvenue en dessous d'une distance prédéterminée par rapport à une limite de la zone de détection (18) ;
- tant qu'il est déterminé que la personne (20) est parvenue en dessous de la distance prédéterminée : afficher au moyen des lunettes de réalité virtuelle (12) un effet (26, 28) caractérisant le dépassement inférieur de la distance prédéterminée, dans lequel le type de représentation de l'effet (26, 28) est prédéterminé en fonction de l'orientation de tête déterminée ;
**caractérisé en ce que**
- l'orientation frontale ou vers l'arrière de la tête de la personne (20) à la limite de la zone de détection (18) lors du dépassement inférieur de la distance prédéterminée est déterminée à l'aide de l'orientation de tête détectée ;
- pour une orientation frontale de la tête par rapport à la limite, seule une frontière virtuelle (28) agencée devant la personne (20) dans l'environnement virtuel (22) est affichée en tant qu'effet au moyen des lunettes de réalité virtuelle (12) ;
- pour une orientation vers l'arrière de la tête par rapport à la limite, un quadrillage (26) correspondant à la zone de détection (18) est affiché dans l'environnement virtuel (22) en tant qu'effet au moyen des lunettes de réalité virtuelle (12) et/ou l'objet virtuel (24) est au moins partiellement caché et/ou obscurci et/ou l'environnement virtuel (22) est au moins partiellement caché et/ou obscurci.

2. Procédé selon la revendication 1,
**caractérisé en ce que**
un champ de vision binoculaire pour la personne (20) est prédéterminé et une orientation frontale est supposée si la limite de la zone de détection (18) se situe dans le champ de vision binoculaire et si ce n'est pas le cas une orientation vers l'arrière est supposée.

3. Procédé selon l'une quelconque des revendications précédentes,
**caractérisé en ce que**
la perspective virtuelle à partir de laquelle l'objet virtuel (24) agencé dans l'environnement virtuel (22) est affiché est prédéterminée de telle manière qu'une direction de vision virtuelle correspond à l'orientation de tête détectée et une position d'observation virtuelle correspond à la position détectée de la personne (20).

4. Système de réalité virtuelle (10), avec
- des lunettes de réalité virtuelle (12) ;
- un dispositif de détection (16) conçu pour détecter une position et une orientation de tête d'une personne (20) qui a mis les lunettes de réalité virtuelle (12) et se trouve dans une zone de détection (18) ;
- un dispositif de commande (14) conçu pour
• commander aux lunettes de réalité virtuelle (12) d'afficher un objet virtuel (24) agencé dans un environnement virtuel (22) en se plaçant dans une perspective virtuelle prédéterminée en fonction de la position et de l'orientation de tête détectées;
• déterminer, à l'aide de la position détectée, si la personne (20) est parvenue en dessous d'une distance prédéterminée par rapport à une limite de la zone de détection (16) ;
• commander aux lunettes de réalité virtuelle (12) d'afficher un effet (26, 28) caractérisant le dépassement inférieur de la distance prédéterminée, tant qu'il est déterminé que la personne (20) est parvenue en dessous de la distance prédéterminée, dans lequel le type de représentation de l'effet (26, 28) est prédéterminé en fonction de l'orientation de tête déterminée ;
**caractérisé en ce que**
le dispositif de commande (14) est en outre conçu pour
- déterminer, à l'aide de l'orientation de tête détectée, si la tête de la personne (20) est orientée de manière frontale ou vers l'arrière à la limite de la zone de détection (18) lors d'un dépassement inférieur de la distance prédéterminée ;
- pour une orientation frontale de la tête par rapport à la limite, afficher exclusivement une frontière virtuelle (28) agencée devant la personne (20) dans l'environnement virtuel (22) en tant qu'effet au moyen des lunettes de réalité virtuelle (12) ;
- pour une orientation vers l'arrière de la tête par rapport à la limite, afficher un quadrillage (26) correspondant à la zone de détection (18) dans l'environnement virtuel (22) en tant qu'effet au moyen des lunettes de réalité virtuelle (12) et/ou cacher et/ou obscurcir au moins partiellement l'objet virtuel (24) et/ou cacher et/ou obscurcir au moins partiellement l'environnement virtuel (22).
